# EUROPEAN PATENT APPLICATION

(11) **EP 1 914 156 A1**
(43) Date of publication of application: **23.04.2008**
(21) Application number: 07115788.7
(22) Date of filing: 06.09.2007
(51) Int. Cl.: B62J 39/00

(54) **Rearview system for bicycles**

(30) Priority: 08.09.2006 IT TO20060131 U
(71) Applicant: Italmanubri S.p.A., 31037 Loria(Treviso) (IT)
(72) Inventor: Rancan, Franco, 31037 Loria (Treviso) (IT)
(74) Representative: Notaro, Giancarlo

(57) **Abstract**

A rear-view system for bicycles comprises a telecamera device (1) for detecting the image of the scene behind the cyclist, said device being provided with means for connection to a component of the bicycle, and an electronic display device (10) for showing to the cyclist the image generated by the telecamera device (1) associated to the handlebar of the bicycle.

## Description

The present invention relates to the field of bicycles and bicycle components, and more particularly, even though not exclusively, to the field of components for racing and competition bicycles.

The purpose of the invention is to propose an innovative rear-view system for bicycles, which on the one hand will enable the cyclist to keep an eye on the scene behind him without looking back over his shoulder and on the other hand will present characteristics of small overall dimensions, low weight and high functionality, which will render it suitable for being used to advantage in particular on sports and competition bikes, without any substantial loss in terms of the aerodynamic characteristics and lightness of the bicycle.

A further purpose of the invention is to propose a system of the type specified above that will be simple and immediate to use and at the same time will guarantee a view over wide range of the portion of space under observation, in addition to the possibility, with simple and fast operations, of adapting the system itself to the specific characteristics of the bicycle and its user.

With a view to achieving the above and further purposes, the subject of the invention is a rear-view system for bicycles, comprising a telecamera device for detecting the image of the scene behind the cyclist, said device being provided with means for connection to a component of the bicycle, and an electronic display device, for displaying to the cyclist the image generated by the telecamera device, said display device being associated to the handlebar of the bicycle. In one example of embodiment, the telecamera device is provided with means for its connection in an adjustable position to the saddle or to the seat-post member of the bicycle.

Preferably, the electronic display device, instead of being simply installed on the tube of the handlebar, for example by means of conventional clip devices, is integrated in the body of the handlebar, which for the purpose has a widened section defining a seat, in which the display device is received. According to an alternative solution, the electronic display device is carried by a supporting body integrated in the cap element used for gripping the tube of the handlebar between said element and the handlebar stem.

The telecamera device and the electronic display device are connected to one another by means of cables or alternatively by means of a wireless connection system of any known type. The display device can also be integrated in a computer unit for a bicycle associated to the handlebar of the bicycle.

It should be noted that, even though in the past there have already been proposed rear-view systems with telecameras for vehicles in general and also for two-wheeled vehicles, in particular motorcycles, none of them presents the characteristics and advantages referred to above, which render the system according to the invention particularly suitable for being used on sports and competition bicycles. In the case of said specific application, the requirements of lightness, of reduced impact on aerodynamic resistance, and ease and immediacy of use for the cyclist are essential. Said requirements are met in an optimal way by the system according to the invention thanks to the characteristics that have been referred to above.

Further characteristics and advantages of the invention will emerge from the ensuing description, with reference to the annexed plates of drawings, which are provided merely by way of non-limiting example and in which:
- Figure 1 is a schematic side view of a saddle with corresponding seat-post of a bicycle, equipped with the telecamera device forming part of the system according to the invention;
- Figure 2 illustrates a variant of Figure 1, in which the telecamera device is mounted on the seat-post instead of on the saddle;
- Figures 3 and 4 are a schematic plan view and a partially sectioned side view of the tube of the handlebar of a sports bicycle, incorporating the display device forming part of the system according to the invention;
- Figure 5 is a plan view of a handlebar of a racing bike incorporating the display device forming part of the system according to the invention; and
- Figures 6 are 7 are, respectively, a plan view and a side view of a handlebar stem of a bicycle with the display device integrated in the cap element that is used for gripping the tube of the handlebar against the handlebar stem.

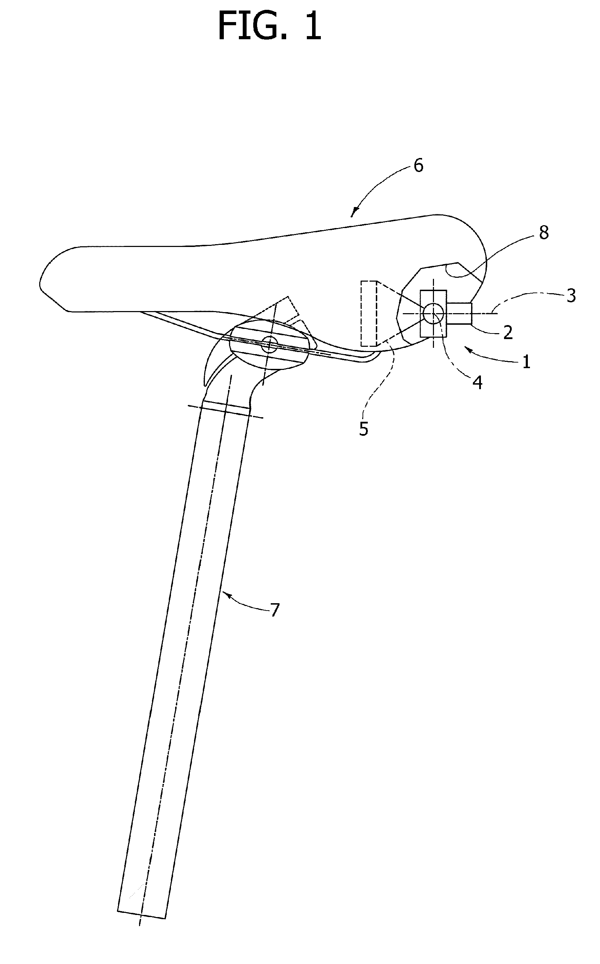

With reference to Figure 1, the reference number 1 designates as a whole a telecamera device of any known type, including a lens 2 having an optical axis 3. The body of the telecamera device 1 is supported in an adjustable way at least about an axis 4 orthogonal to the optical axis 3 and orthogonal to the longitudinal vertical plane of the bicycle on a support 5 that is fixed in an uncoupleable way on the supporting structure (not illustrated) of a saddle 6 equipped with seat-post 7.

Preferably, the body of the telecamera device 1 is mounted on the support 5 by means of a ball joint so as to enable adjustment of the optical axis 3 not only vertically but also horizontally.

The telecamera device 3 is positioned within a cavity 8 made in the body of the saddle that is configured so as to guarantee an adequate field of view as the inclination of the optical axis 3 varies. The telecamera device 1 is positioned in an area readily accessible for the cyclist, even when he is sitting on the saddle, so as to facilitate the operation of adjustment of the orientation of the telecamera 1, an adjustment that is made by the cyclist by checking the image appearing on the electronic display device that is described in what follows.

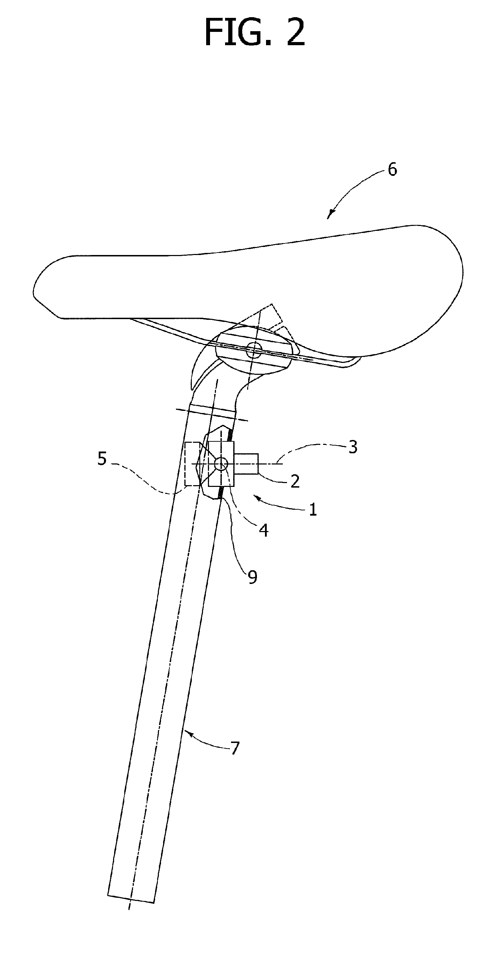

Figure 2 illustrates a variant that differs in that the support 5 carrying the telecamera device 2 is prearranged within the tube of the seat-post 7 and fixed therein by connection means of any known type. In this case, the wall of the seat-post tube has an opening 9 that enables positioning and adjustment of the telecamera device 1.

The image generated of the telecamera device 1 is sent by means of a wired-connection system or, preferably, by means of a wireless-connection system, of any known type, to an electronic display device 10 having a display 11 built according to any known technology, for example LCD technology, for showing the cyclist the image of the scene behind him generated by the telecamera device 1.

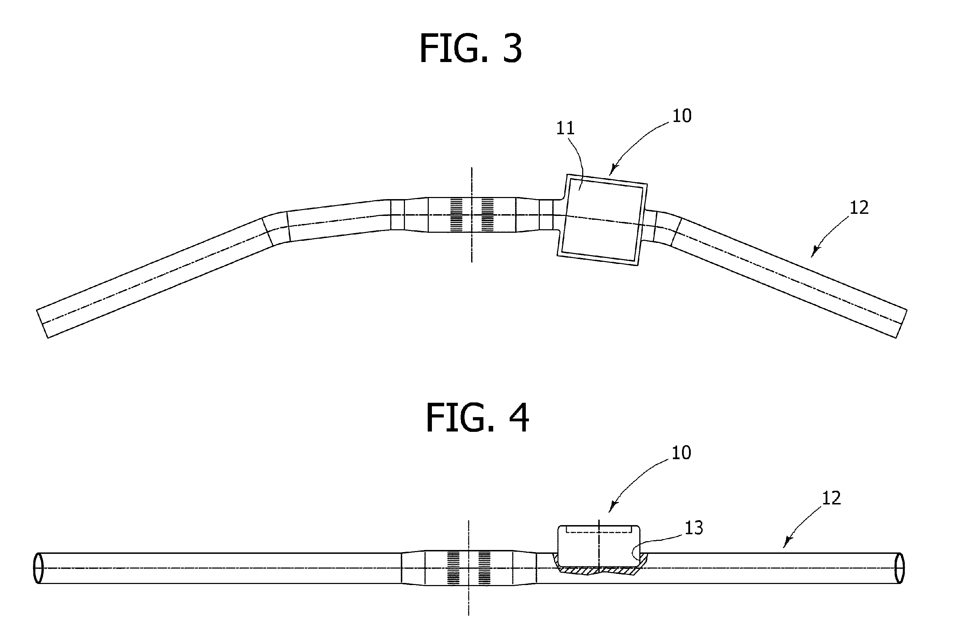

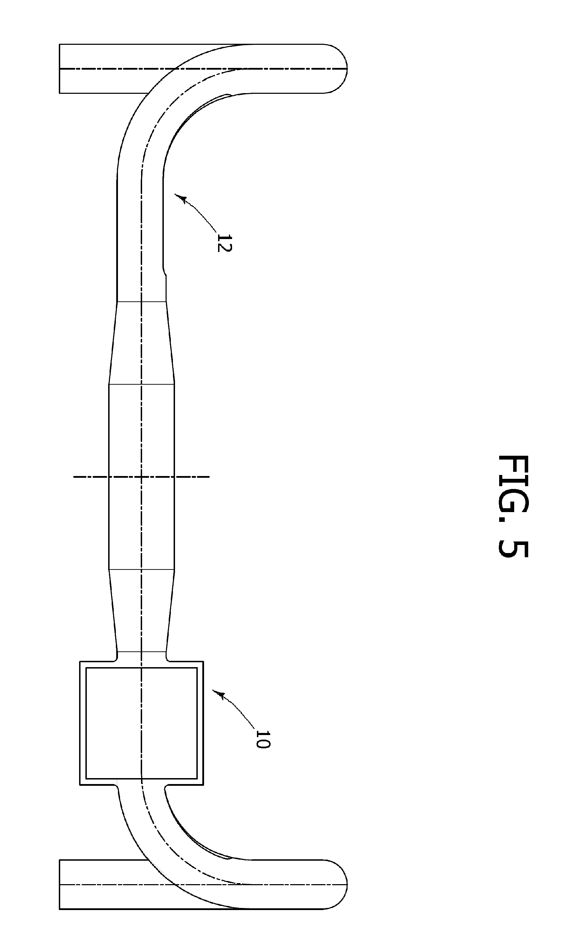

Once again according to the invention, the electronic display device 10 has a body that is not simply installed on the tube of the handlebar by means of anchoring devices of any known type, for example by means of clip devices, but is instead integrated at least partially in the tube of the handlebar or in one of its accessory components. In the case of Figures 3 and 4, which refer to a tube 12 of a handlebar for a sports bicycle, the tube 12 has a notched area 13 that defines a seat that receives the bottom part of the body of the display device 10. The same arrangement is usable also in the case of the tube of a handlebar for a racing bike (Figure 5).

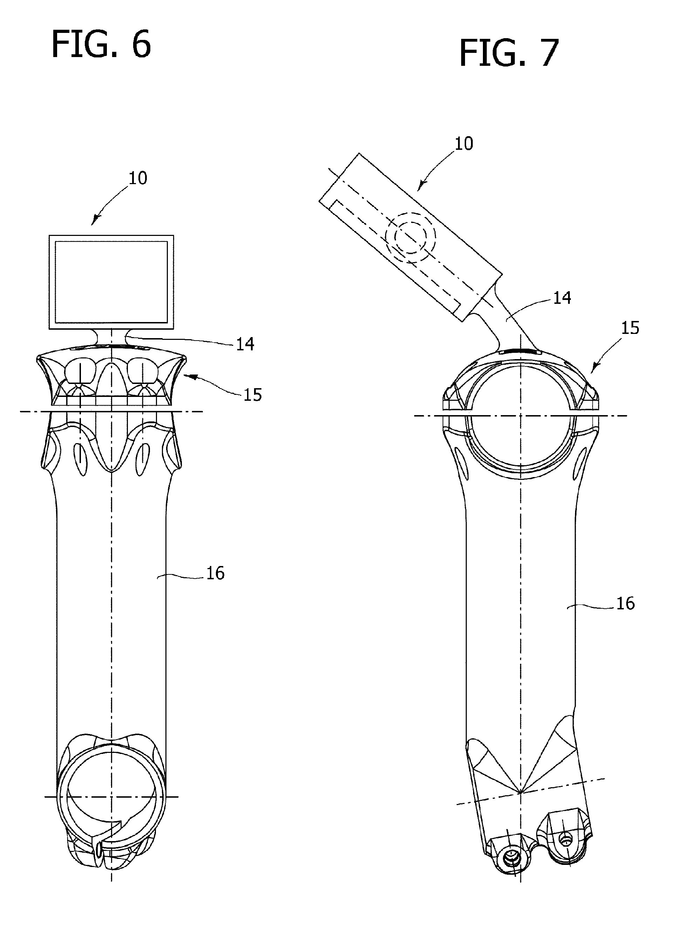

Figures 6 and 7 refer to the case where the body of the display device 10 is supported by a shank or support 14 integral with the cap element 15 that is used for gripping the tube of the handlebar between said element and a stem 16 for the handlebar.

In all the embodiments illustrated above, the system according to the invention guarantees the advantage of reducing to a minimum the impact of the device on the aerodynamic resistance of the bicycle.

A more advanced embodiment may envisage an electrical actuator for adjustment of the orientation of the telecamera, which can be controlled using the directional push-buttons provided on the body of the display device.

The system comprises a rechargeable electric battery (not illustrated) for supply of the electronic display device and of the telecamera device.

Naturally, without prejudice to the principle of the invention, the details of construction may vary widely with respect to what is described merely by way of example.

## Claims

1. A rear-view system for bicycles, comprising a telecamera device (1) for detecting the image of the scene behind the cyclist, provided with means (5) for connection to a component of the bicycle, and an electronic display device (10) for showing to the cyclist the image generated by the telecamera device (1), said display device (10) being associated to the handlebar of the bicycle.

2. The rear-view system according to Claim 1, **characterized in that** the electronic display device (10) has a body at least partially received within a seat (13) formed in the body of the handlebar (12) or in the body of a component (15) associated to the handlebar, so that the display device is integrated in the handlebar or in said component.

3. The rear-view system according to Claim 2, **characterized in that** the body of the handlebar (12) is constituted by a tubular element, the wall of which has a notched portion defining the aforesaid seat (13) for the electronic display device.

4. The rear-view system according to Claim 2, **characterized in that** the body of the electronic display device (10) is carried by a support (14) integrated in a cap element (15), which can be gripped to a stem (16) for the handlebar in order to clamp the tubular body of the handlebar between said stem (16) and said cap element (15).

5. The rear-view system according to Claim 4, **characterized in that** said cap element is set at one front end of said stem (16) for the handlebar and **in that** the body of the aforesaid electronic display device extends from the front end of said cap element (15).

6. The rear-view system according to Claim 1, **characterized in that** said electronic display device is connected to the aforesaid telecamera device (1) via a wired-connection system.

7. The rear-view system according to Claim 1, **characterized in that** the aforesaid electronic display device (10) is connected to the telecamera device (1) through a wireless-connection system.

8. The rear-view system according to Claim 1, **characterized in that** the body of the aforesaid telecamera device (1) is connected in a way that is orientable at least about an axis (4) to a support (5), which can be fixed to a component of the bicycle.

9. The rear-view system according to Claim 8, **characterized in that** the support (5) carrying the telecamera device (1) is provided with means for fixing thereof to the structure of the saddle (6), adjacent to the rear end of the saddle, so that the telecamera device is received within a space (8) in the rear part of the saddle shaped and sized so as to receive the telecamera device (1) and enable orientation thereof with respect to said support (5).

10. The rear-view system according to Claim 8, **characterized in that** the telecamera device (1) is connected to the aforesaid support (5) by means of a ball joint.

11. The rear-view system according to Claim 8, **characterized in that** said support is prearranged for being mounted in the tubular body of the seat-post member (7) of the bicycle, inside it, said tubular body having an opening (9), within which the telecamera device (1) is received, said opening (9) being sized for enabling prearrangement and orientation of said telecamera device(1) inside it.

12. The rear-view system according to Claim 1, **characterized in that** electrically operated actuator means are provided for controlling orientation of the telecamera device, said electronic display device including a body, to which push-button means are also associated for activation of said actuator means so as to enable the cyclist to check on the electronic display device the field of vision of the telecamera device (1) according to the orientation of the telecamera device (1) set via said push-button means.

13. The rear-view system according to Claim 1, **characterized in that** it comprises a rechargeable electric battery for supply of the electronic display device and of the telecamera device.

14. The rear-view system according to Claim 1, **characterized in that** the aforesaid electronic display device (10) is integrated in a cycle-computer.
The foregoing substantially as described and illustrated herein and for the purposes specified.
